# FASCICULE DE BREVET EUROPEEN

(11) **EP 1 688 733 B1**
(45) Date de publication et mention de la délivrance du brevet: **06.08.2008**
(21) Numéro de dépôt: 06100964.3
(22) Date de dépôt: 27.01.2006
(51) Int. Cl.: G01N 19/02

(54) **Dispositif et procédé de mesure de forces de frottement**
Vorrichtung und Verfahren zur Messung von Reibungskräften
Device and procedure for measuring frictional forces

(30) Priorité: 03.02.2005 FR 0550311
(43) Date de publication de la demande: 09.08.2006
(73) Titulaire: COMMISSARIAT A L'ENERGIE ATOMIQUE, 75015 Paris (FR)
(72) Inventeur: David, Dominique, 38640, CLAIX (FR)
(74) Mandataire: Poulin, Gérard

(56) Documents cités:
- EP-A- 0 970 657
- FR-A- 2 811 764
- US-A- 5 571 973
- US-A- 5 989 199
- US-A1- 2003 056 579
- US-A1- 2003 160 621

## Description

### DOMAINE TECHNIQUE

La présente invention concerne un dispositif et un procédé de mesure de forces de frottement.

L'invention vise à acquérir et à caractériser des efforts de friction, c'est-à-dire des efforts qui surviennent lorsque deux objets sont déplacés l'un par rapport à l'autre tout en étant maintenus en contact l'un avec l'autre.

L'invention trouve des applications notamment dans les domaines suivants :
- tapis de prévention des lésions cutanées (en particulier moyens d'assise des handicapés, matelas anti-escarres, semelles et chaussures),
- contrôle de l'adhérence d'objets glissants ou roulants, par exemple les skis et les pneus, et
- caractérisation de coefficients de glissement, par exemple pour définir la qualité de glissement de la neige ou du verre.

### ÉTAT DE LA TECHNIQUE ANTÉRIEURE

On connaît déjà des dispositifs qui utilisent un réseau (en anglais « array ») de capteurs (en anglais « sensors ») uni-dimensionnels. Ce réseau, ou matrice, est apte à fournir l'image de la répartition de la pression lors du contact de deux objets ; on l'utilise par exemple pour former l'image de l'assise d'un handicapé sur son fauteuil.

Ces dispositifs connus présentent des inconvénients. En effet, ils ne mesurent que des efforts normaux, s'exerçant selon un axe perpendiculaire à la surface de contact des deux objets, alors que le mouvement relatif de ces objets se traduit par des forces tangentielles, qui sont parallèles à cette surface et s'ajoutent aux forces normales, qui apparaissent lorsque les objets sont immobiles l'un par rapport à l'autre.

De plus, la dynamique de ces forces tangentielles est prépondérante car elle détermine le caractère de dangerosité de la friction qui peut conduire, par exemple, à des dérapages ou à des lésions.

On rappelle que les forces de frottement entre deux objets en contact l'un avec l'autre s'exercent de façon tangentielle et sont, en première approximation, proportionnelles à la vitesse relative des objets. On comprend donc la nécessité de disposer d'informations de nature à la fois tangentielle et temporelle.

On se reportera aux documents suivants :
[1] EP 0 970 657 A, Apparatus and method for measuring the pressure distribution generated by a three-dimensional object
[2] US 5 571 973 A, Multi-directional piezoresistive shear and normal force sensors for hospital mattresses and seat cushions.

Le document [1] décrit un réseau de capteurs de force à une seule dimension (c'est-à-dire des capteurs de force suivant une seule direction), ne permettant pas d'accéder aux informations mentionnées ci-dessus.

Le document [2] décrit des capteurs qui s'appliquent notamment aux matelas anti-escarres, application qui est également visée par la présente invention. Cependant, ce document ne divulgue pas un aspect important de la présente invention, à savoir un procédé à caractère spatio-temporel qui est au coeur de l'estimation des énergies de frottement.

En fait, aucun traitement temporel n'est introduit dans les systèmes connus qui exploitent des réseaux de capteurs en vue de mesurer la pression exercée par un objet sur un autre objet.

### EXPOSÉ DE L'INVENTION

La présente invention a pour but de remédier aux inconvénients précédents.

Elle vise à mesurer les frottements d'une surface sur une autre et, plus précisément, à établir le bilan des forces de frottement en présence sur la surface de contact de deux objets qui se déplacent l'un par rapport à l'autre.

En particulier, l'invention vise à quantifier les zones présentant un risque, par exemple un risque d'échauffement, de rupture ou de lésion, lors d'un tel contact.

Pour ce faire, l'invention propose d'utiliser des capteurs de force tridimensionnels (c'est-à-dire des capteurs de force suivant trois directions perpendiculaires les unes aux autres), ces capteurs étant répartis sur la surface d'un support, et d'utiliser des moyens électroniques de traitement des signaux fournis par ces capteurs pour retrouver les vitesses tangentielles et, de ce fait, les forces de frottement.

De façon précise, la présente invention concerne tout d'abord un dispositif de mesure du frottement créé par un objet, ce dispositif comprenant
- un ensemble de capteurs de force tridimensionnels, qui sont répartis sur une face d'un support, chaque capteur étant prévu pour fournir des signaux électriques qui sont représentatifs d'une force exercée par l'objet sur ce capteur, cet objet étant susceptible de se déplacer par rapport à l'ensemble des capteurs ou réciproquement, et
- des moyens électroniques de traitement des signaux fournis par les capteurs, ces moyens électroniques de traitement étant prévus pour déterminer les composantes des forces exercées sur les capteurs par l'objet,
ce dispositif étant caractérisé en ce que les moyens électroniques de traitement sont en outre prévus pour fournir la vitesse tangentielle relative d'au moins un point de l'objet, qui est en contact avec l'un des capteurs.

Selon un mode de réalisation particulier du dispositif de l'invention, ce point, dont la vitesse tangentielle relative est fournie et qui est en contact avec l'un des capteurs, est en outre un point en lequel la composante de la force exercée par l'objet sur ce capteur, composante qui est normale à la face du support, est maximale.

Les moyens électroniques de traitement peuvent être en outre prévus pour fournir le coefficient de frottement de l'objet lorsque celui-ci est mis en contact avec au moins l'un des capteurs et déplacé par rapport à ce capteur ou réciproquement.

On peut ainsi obtenir un système de reconnaissance de texture.

De préférence, les capteurs sont répartis régulièrement sur la face du support et forment ainsi un réseau, ou matrice, sur cette face.

Selon un premier mode de réalisation particulier de l'invention, le support, sur la face duquel sont répartis les capteurs, est rigide.

Selon un deuxième mode de réalisation particulier, le support, sur la face duquel sont répartis les capteurs, est souple.

L'ensemble des capteurs peut être recouvert d'une couche d'un matériau élastomètre.

Selon un mode de réalisation préféré de l'invention, chaque capteur comporte une membrane déformable, fixée au support et pourvue de jauges de contrainte, et une tige rigide qui est reliée à cette membrane, chaque capteur étant prévu pour fournir des signaux électriques qui sont représentatifs d'une force exercée sur la tige que comporte ce capteur.

La présente invention concerne en outre procédé de mesure du frottement d'un objet, ce procédé utilisant un ensemble de capteurs de force tridimensionnels, qui sont répartis sur une face d'un support, chaque capteur fournissant des signaux électriques qui sont représentatifs d'une force vectorielle exercée par l'objet sur ce capteur, cet objet étant susceptible de se déplacer par rapport à l'ensemble des capteurs ou réciproquement, procédé dans lequel on traite les signaux fournis par les capteurs, pour déterminer les composantes des forces exercées sur les capteurs par l'objet, ce procédé étant caractérisé en ce que l'on détermine en outre la vitesse tangentielle relative d'au moins un point de l'objet, qui est en contact avec l'un des capteurs.

Selon un mode de mise en oeuvre particulier du procédé objet de l'invention, ce point, dont la vitesse tangentielle relative est déterminée et qui est en contact avec l'un des capteurs, est en outre un point en lequel la composante de la force exercée par l'objet sur ce capteur, composante qui est normale à la face du support, est maximale.

De préférence, on filtre les signaux fournis par les capteurs, on effectue une analyse spatio-temporelle des signaux ainsi filtrés, pour établir une carte des efforts instantanés subis par les capteurs, et l'on établit la vitesse de propagation des efforts tangentiels subis par ces capteurs, les points de la zone de contact entre l'objet et les capteurs, où cette vitesse est maximale, étant les points où la production d'énergie est maximale.

Selon un mode de mise en oeuvre particulier du procédé de l'invention, on déplace préalablement et successivement plusieurs objets-témoins contre l'ensemble des capteurs ou réciproquement, pour mesurer les frottements de ces objets-témoins et mémoriser les textures et rugosités respectives de ceux-ci et, en vue de reconnaître ensuite un autre objet, on déplace cet autre objet contre l'ensemble des capteurs ou réciproquement, pour mesurer le frottement de cet autre objet et comparer sa texture et sa rugosité à celles qui ont été mémorisées.

De préférence, chaque capteur comporte une membrane déformable, fixée au support et pourvue de jauges de contrainte, et une tige rigide qui est reliée à cette membrane, chaque capteur étant prévu pour fournir des signaux électriques qui sont représentatifs d'une force exercée sur la tige que comporte ce capteur.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés, sur lesquels :
- la figure 1 est une vue schématique d'un mode de réalisation particulier du dispositif objet de l'invention,
- la figure 2 est en vue schématique d'un capteur de force tridimensionnel qui est utilisé dans le dispositif de la figure 1,
- la figure 3 illustre schématiquement des étapes d'un mode de mise en oeuvre particulier du procédé objet de l'invention, et
- la figure 4 est une vue schématique d'un autre mode de réalisation particulier du dispositif objet de l'invention.

### EXPOSÉ DÉTAILLÉ DE MODES DE RÉALISATION PARTICULIERS

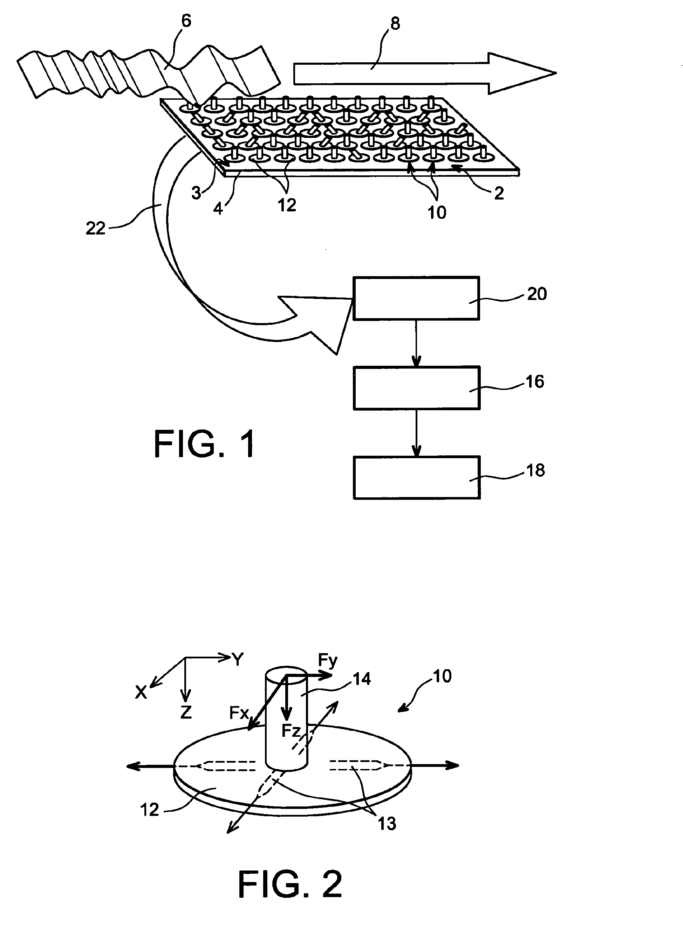

La figure 1 est une vue schématique d'un mode de réalisation particulier du dispositif de mesure de frottement, objet de l'invention.

Ce dispositif comprend un ensemble 2 de capteurs de force tridimensionnels qui sont répartis sur une face 3 d'un support 4. Ce support 4 peut être rigide ou, au contraire, souple.

Le dispositif permet de mesurer le frottement d'un objet 6 que l'on met en contact avec l'ensemble 2 de capteurs et que l'on déplace par rapport à cet ensemble, suivant la flèche 8 dans l'exemple représenté. Cependant, il s'agit d'un déplacement relatif : on peut laisser l'objet 6 fixe, mettre l'ensemble 2 en contact avec cet objet et déplacer cet ensemble par rapport à l'objet.

Comme on le voit schématiquement sur la figure 2, chaque capteur de force tridimensionnel 10 comporte une membrane déformable 12, qui est pourvue de jauges de contrainte 13, et une tige rigide 14 qui est reliée à cette membrane. Cette dernière est fixée sur la face du support 4(figure 1).

Chaque capteur fournit des signaux électriques lorsque l'objet 6 exerce une force sur la tige de ce capteur. Le traitement de ces signaux permet de déterminer les trois composants Fx, Fy, Fz de la force. Ces trois composantes sont comptées sur trois axes perpendiculaires les uns aux autres, deux de ces axes étant parallèles à la face 3 du support 4 tandis que le troisième axe est perpendiculaire à cette face.

Les capteurs 10 peuvent être répartis de façon quelconque sur la face 3 du support 4. Cependant, ils sont de préférence répartis régulièrement sur cette face, comme le montre la figure 1. Les capteurs forment alors un réseau, ou matrice sur cette face.

De tels capteurs de force tridimensionnels, encore appelés capteurs de force tri-axes, sont connus par le document suivant :

[3] US 6 666 079 (Poulbot et al.)

Les capteurs miniatures, ou micro-capteurs, décrits dans ce document, comportent chacun une tige de silicium de quelques dizaines de micromètres de diamètre qui, lorsqu'elle est soumise à une force, crée une déformation locale de la membrane sur laquelle cette tige prend appui. Cette déformation est captée par les jauges de contrainte dont est pourvue cette membrane. La recombinaison (traitement) des signaux, qui sont alors émis par ces jauges de contrainte et sont représentatifs de la force, permet de retrouver l'effort subi par la tige de silicium et, plus précisément, de déterminer les trois composantes de la force exercée sur cette tige.

Cependant, dans l'invention, on peut utiliser tout autre capteur de force tridimensionnel, apte à fournir des signaux électriques dont le traitement permet de déterminer les trois composantes d'une force exercée sur ce capteur.

Le dispositif de la figure 1 comprend aussi des moyens électroniques 16 de traitement des signaux fournis par les capteurs 10. Ces moyens électroniques 16 sont prévus pour déterminer les composantes des forces excercées sur les tiges des capteurs par l'objet 6.

Conformément à l'invention, ces moyens électroniques 16 sont en outre prévus pour fournir la vitesse tangentielle de chaque point de l'objet 6, qui est contact avec l'une des tiges 14 et en lequel la composante de la force exercée par l'objet 6 sur cette tige, composante qui est normale, c'est-à-dire orthogonale, à la face 3 du support 4, est maximale.

Ces moyens électroniques 16 sont pourvus de moyens d'affichage 18.

On voit en outre, sur la figure 1, des moyens 20 de lecture des données fournies par l'ensemble de capteurs 2. Ces moyens de lecture de données, ou moyens d'acquisition des mesures, sont reliés aux moyens électroniques de traitement 16 pour fournir à ces derniers les mesures ainsi acquises.

De plus, la liaison 22 entre l'ensemble de capteurs et ces moyens d'acquisition des mesures 20 peut être une liaison filaire. Cependant, on peut également utiliser une liaison sans fil.

Dans ce cas, l'ensemble de capteurs est muni de moyen (non représentés) de numérisation des signaux électriques issus des capteurs. Les mesures acquises sont alors transmises sous forme de signaux radiofréquence (par exemple de type WiFi) aux moyens d'acquisition 20 qui sont alors eux-mêmes munis d'un récepteur radiofréquence pour les détecter.

De préférence, les moyens électroniques de traitement 16 sont en outre prévus pour calculer les vitesses tangentielles des autres points de l'objet 6, c'est-à-dire des points en lesquels la composante normale à la face 3 du support 4 n'est pas maximale.

Comme on le verra mieux par la suite, l'invention permet de réaliser un système de reconnaissance de texture. Dans ce cas, les moyens électroniques de traitement 16 sont également prévus pour fournir la carte des coefficients de frottement de l'objet 6 lorsque celui-ci est mis en contact avec l'ensemble 2 des capteurs 10 et déplacé par rapport à cet ensemble ou réciproquement.

Le dispositif de la figure 1 permet de mettre en oeuvre un procédé conforme à l'invention pour mesurer le frottement de l'objet 6.

Selon ce procédé, on traite les signaux fournis par chaque capteur 10 pour déterminer les trois composantes de la force excercée sur la tige 14 de ce capteur par l'objet 6 et l'on détermine en outre la vitesse tangentielle relative de chaque point de cet objet, qui est en contact avec l'une des tiges 14 et en lequel la composante de la force exercée par l'objet sur cette tige, composante qui est normale à la face 3 du support 4, est maximale.

Plus précisément, selon ce procédé, on effectue un pré-traitement des signaux élémentaires, qui sont respectivement émis par les capteurs, puis une analyse spatio-temporelle des signaux ainsi pré-traités. On reviendra par la suite sur ce pré-traitement et cette analyse spatio-temporelle.

On établit ensuite la carte instantanée des efforts, c'est-à-dire des images dans lesquelles la valeur des pixels est représentative de ces efforts vectoriels.

Puis on établit la dynamique de propagation des efforts tangentiels, c'est-à-dire la vitesse de propagation de ces efforts tangentiels.

On détermine alors les points de la zone de contact entre l'objet 6 et les tiges 14 des capteurs 10 de l'ensemble 2, points en lesquels cette dynamique est maximale. Il s'agit des points où la production d'énergie est maximale. Ces points indiquent donc les zones de rupture potentielle ou d'échauffement maximal de l'objet 6, zones qui sont à surveiller.

On considère dans ce qui suit le pré-traitement des signaux élémentaires fournis par les capteurs 10.

Chaque capteur 10 délivre jusqu'à trois signaux correspondant aux efforts comptés suivant trois axes X, Y et Z qui sont avantageusement perpendiculaires les uns aux autres. Ces signaux sont traités de façon classique, en respectant les lois du traitement du signal. Plus précisément, ces signaux sont traités en prenant en compte la théorie de l'échantillonnage de Shannon pour les signaux analogiques.

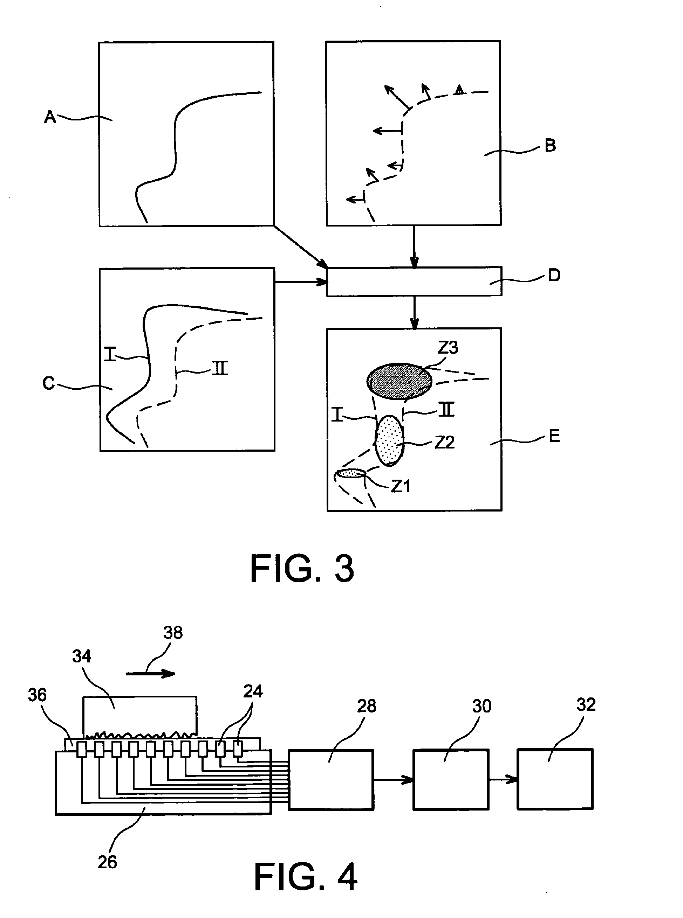

Il convient de noter que le dispositif de la figure 1 induit deux sortes d'échantillonnages, à savoir
- un double échantillonnage spatial, qui est dû à la matrice des capteurs 10, et
- un échantillonnage temporel, qui résulte de la lecture de valeurs successives, issues de cette matrice.
   Ces deux échantillonnages donnent lieu à des pré-traitements spécifiques, à savoir
- un filtrage classique du type filtrage de Shannon, et/ou
- une amélioration du rapport signal sur bruit, tel que le filtrage adapté, et/ou
- le filtrage de Kalman.
   En ce qui concerne l'échantillonage spatial, ces pré-traitements spécifiques sont liés à l'espacement des capteurs 10 dans la matrice et aux fréquences spatiales qui résultent des surfaces en contact. En effet, l'une de ces surfaces peut par exemple présenter des rugosités.
   En ce qui concerne l'échantillonnage temporel, les pré-traitements spécifiques sont liés à la fréquence d'échantillonnage et aux fréquences des phénomènes vibratoires qui sont engendrés par le frottement entre l'objet 6 et les tiges 14 des capteurs 10.
   On considère maintenant l'analyse spatio-temporelle des signaux pré-traités. Cette analyse constitue l'essentiel du procédé conforme à l'invention.
   En effet, le mouvement relatif des surfaces se traduit par une carte instantanée des efforts tridimensionnels. Cette carte se déplace à une vitesse correspondant à la vitesse relative de l'objet 6 par rapport à l'ensemble des capteurs 10, c'est-à-dire par rapport au support 4.
   De plus, simultanément, cette carte se déforme en fonction, en particulier,
- de l'élasticité des surfaces en présence, à savoir la surface de l'objet 6 et la face 3 du support 4, sur laquelle est formé l'ensemble des capteurs 10, et
- des phénomènes transitoires dûs au frottement.
   On effectue par exemple le traitement suivant, qui est valable aussi bien lorsque la matrice 2 (plus exactement le support 4) est rigide que lorsqu'elle est souple.
   Ce traitement est schématiquement illustré par la figure 3 qui est relative à la cartographie des zones de contact.
   On enregistre la carte des efforts tridimensionnels, ou forces tridimensionnelles, à l'instant initial t0.
   La sous-carte des efforts orthogonaux à l'instant t0 (A sur la figure 3) indique les fronts des contacts où la pression est maximale. On précise que les efforts orthogonaux sont comptés sur l'axe Z qui est perpendiculaire à la face 3 du support 4.
   La sous-carte des efforts tangentiels à l'instant t0 (B sur la figure 3) indique les directions de propagation des fronts des contacts maximaux. La dimension de cette sous-carte est égale à 2. On précise que les efforts tangentiels sont comptés sur les axes X et Y qui sont parallèles à la face 3 du support 4.
   A l'instant t1 = t0 + Δt, où Δt représente l'intervalle de temps entre deux acquisitions successives d'un capteur donné et vaut par exemple 10ms, on calcule la carte des efforts verticaux (C sur la figure 3 où I représente la carte à l'instant t1 et II représente la carte à l'instant t0) ou, plus exactement, des efforts orthogonaux ; mais le support 4 est généralement horizontal de sorte que l'axe Z est généralement vertical.
   A partir de
- la carte des efforts orthogonaux à l'instant t0,
- la carte des efforts orthogonaux à l'instant t1, et
- la carte des efforts horizontaux (ou plus exactement des efforts tangentiels, mais les axes X et Y sont généralement horizontaux puisque l'axe Z est généralement vertical) à l'instant t0,
on calcule la carte des vitesses de propagation des fronts des contacts maximaux.

Pour ce faire, on utilise une technique telle que, par exemple, la technique du contour déformable (en anglais « deformable contour technique ») qui permet de suivre l'évolution d'une ligne caractéristique - dans le cas présent, un front de contact - d'une image lorsqu'une contrainte, constituée par un champ de vecteurs, est appliquée à cette ligne.

A ce sujet, on se reportera par exemple au document suivant .
[4] Bossart P.L., Détection de contours réguliers dans des images bruitées et texturées : association des contours actifs et d'une approche multiéchelle, Thèse d'Université, Signal-Images-Parole, Grenoble (France), 17 octobre 1994.

Une autre technique consiste à recourir à une corrélation, éventuellement par blocs de points, entre les images à t0 et celles à t1.

Les vitesses de propagation ainsi obtenues et combinées aux valeurs des forces de frottement désignent les zones des dépenses énergétiques dans la surface de contact et donc, par exemple, les zones de lésions potentielles.

Sur la figure 3, D représente l'analyse spatio-temporelle que l'on fait à partir des trois cartes mentionnées plus haut.

La référence E représente la carte des énergies de frottement maximales à l'instant t1, qui résulte de cette analyse spatio-temporelle.

Dans cette carte, I représente la carte à t1, II représente la carte à t0, les zones Z1, Z2 et Z3 représentent les zones identifiées lors de l'étape D et l'énergie va en augmentant de bas en haut (de la zone Z1 à la zone Z3) .

Avantageusement, les étapes ci-dessus peuvent être réitérées entre les instants t1 et t2=t1+Δt, et ainsi de suite entre tN et tN+1=tN+Δt, où N est un entier strictement supérieur à 2.

En général, on utilise une profondeur temporelle de deux images consécutives (tN et tN+Δt). On peut aussi combiner un plus grand nombre d'images successives avec des méthodes prédictives comme celle de type filtre de Kalman, ce qui permet d'améliorer la qualité des résultats.

La présente invention s'applique également à la reconnaissance d'une texture physique.

Il est en effet intéressant de reconnaître automatiquement une telle texture. Il s'agit alors d'être capable de mémoriser puis de distinguer différents matériaux à partir d'un dispositif conforme à l'invention, par exemple du genre du dispositif de la figure 1.

Un procédé de reconnaissance conforme à l'invention consiste à créer un mouvement relatif entre l'objet, dont on veut reconnaître la texture, et le dispositif, puis à enregistrer les signaux issus de la matrice de capteurs. L'étape de pré-traitement est alors effectuée.

Lors de la phase d'apprentissage de la texture, plusieurs échantillons (objets-témoins) sont soumis au dispositif et sont analysés puis décomposés, par exemple en leurs composantes principales. Les résultats sont mémorisés et constituent une base de connaissance (mémoire des textures apprises).

Lors de la phase de reconnaissance, on procède de même jusqu'à la décomposition en composantes principales. Des méthodes de calcul de distance permettent ensuite de sélectionner, dans la base de connaissance du système, la texture qui est la plus proche de celle du matériau étudié.

En variante, on peut mettre en oeuvre des techniques d'apprentissage neuronal qui sont classiques et constituent de bons candidats pour le traitement de reconnaissance que l'on veut mettre en oeuvre dans l'invention.

Quelle que soit la technique retenue, il convient de noter que l'apport
- des deux composantes tangentielles de la force de contact et
- de la composante de variation temporelle de cette force de contact
constitue un supplément d'information précieux et très lié à la rugosité de la surface de l'objet puisque cette rugosité se traduit précisément par de tels efforts tangentiels lors du contact (par définition des frottements).

Il convient de noter que la phase d'apprentissage peut précéder les étapes d'enregistrement et de pré-traitement, qui sont effectuées avec l'objet dont on veut reconnaître la texture.

La présente invention présente divers avantages. En effet, elle permet la prise en compte supplémentaire des forces de friction tangentielles et de l'évolution temporelle des forces de contact, d'où une estimation des caractéristiques du frottement qui est bien meilleure qu'avec les systèmes classiques, reposant sur une simple cartographie des forces normales.

De plus, le dispositif objet de l'invention est compatible avec les techniques de la microélectronique. Sa miniaturisation est donc possible et son coût de fabrication peut être réduit.

On peut en outre augmenter la densité des capteurs de la matrice et intégrer les moyens électroniques associés à cette matrice (c'est-à-dire que les moyens sont embarqués) dans le support de celle-ci, ce qui permet d'obtenir un dispositif fonctionnant de manière autonome. De plus, il est possible de reporter les moyens électroniques d'acquisition sur tout type de support rigide ou flexible.

La figure 4 est une vue schématique d'un autre dispositif de mesure de frottement conforme à l'invention.

Ce dispositif comporte encore
- un ensemble de capteurs de force tridimensionnels 24, cet ensemble étant formé sur un support 26,
- des moyens 28 d'acquisition des mesures fournies par cet ensemble,
- des moyens électroniques 30 de traitement des mesures ainsi acquises et
- des moyens 32 de visualisation des résultats fournis par ces moyens électroniques.

On voit aussi sur la figure 4 un objet 34 dont on veut mesurer le frottement conformément à l'invention.

En outre, dans l'exemple de la figure 4, on souhaite déterminer les caractéristiques de la texture de cet objet et les moyens électroniques de traitement 30 sont prévus à cet effet.

Dans cet exemple, les tiges des capteurs ne sont pas directement mises en contact avec l'objet 34 : on recouvre l'ensemble des capteurs 24 d'une couche 36 d'un élastomère, par exemple le PDMS (polydiméthylsiloxane), qui constitue une sorte de peau artificielle et qui peut aussi être texturé pour représenter les empreintes digitales.

Pour mesurer les frottements et caractériser la texture de l'objet 34, on déplace alors ce dernier, suivant la flèche 38, sur cette couche 36, ou l'on déplace le support 26, et donc cette couche 36, sur l'objet qui reste alors fixe.

## Revendications

1. Dispositif de mesure du frottement créé par un objet (6, 34), ce dispositif comprenant
- un ensemble de capteurs de force tridimensionnels (10, 24), qui sont répartis sur une face d'un support (4, 26), chaque capteur étant prévu pour fournir des signaux électriques qui sont représentatifs d'une force exercée par l'objet sur ce capteur, cet objet étant susceptible de se déplacer par rapport à l'ensemble des capteurs ou réciproquement, et
- des moyens électroniques (16, 30) de traitement des signaux fournis par les capteurs, ces moyens électroniques de traitement étant prévus pour déterminer les composantes des forces exercées sur les capteurs par l'objet,
ce dispositif étant **caractérisé en ce que** les moyens électroniques de traitement sont en outre prévus pour fournir la vitesse tangentielle relative d'au moins un point de l'objet (6, 34), qui est en contact avec l'un des capteurs (10, 24), en établissant une analyse spatio-temporelle des signaux émis par les capteurs.

2. Dispositif selon la revendication 1, dans lequel ce point, dont la vitesse tangentielle relative est fournie et qui est en contact avec l'un des capteurs, est en outre un point en lequel la composante de la force exercée par l'objet sur ce capteur, composante qui est normale à la face du support, est maximale.

3. Dispositif selon l'une quelconque des revendications 1 et 2, dans lequel les moyens électroniques de traitement (16; 30) sont en outre prévus pour fournir le coefficient de frottement de l'objet lorsque celui-ci est mis en contact avec au moins l'un des capteurs (10, 24) et déplacé par rapport à ce capteur ou réciproquement.

4. Dispositif selon l'une quelconque des revendications 1 à 3, dans lequel les capteurs (10, 24) sont répartis régulièrement sur la face du support et forment ainsi un réseau, ou matrice, sur cette face.

5. Dispositif selon l'une quelconque des revendications 1 à 4, dans lequel le support (4, 26), sur la face duquel sont répartis les capteurs, est rigide.

6. Dispositif selon l'une quelconque des revendications 1 à 4, dans lequel le support (4, 26), sur la face duquel sont répartis les capteurs, est souple.

7. Dispositif selon l'une quelconque des revendications 1 à 6, dans lequel l'ensemble des capteurs (24) est recouvert d'une couche (36) d'un matériau élastomètre.

8. Dispositif selon l'une quelconque des revendications 1 à 7, dans lequel chaque capteur comporte une membrane déformable (12), fixée au support (4) et pourvue de jauges de contrainte (13), et une tige rigide (14) qui est reliée à cette membrane, chaque capteur étant prévu pour fournir des signaux électriques qui sont représentatifs d'une force exercée sur la tige que comporte ce capteur.

9. Procédé de mesure du frottement créé par un objet (6, 34), ce procédé utilisant un ensemble de capteurs de force tridimensionnels (10, 24), qui sont répartis sur une face d'un support (4, 26), chaque capteur fournissant des signaux électriques qui sont représentatifs d'une force vectorielle exercée par l'objet sur ce capteur, cet objet étant susceptible de se déplacer par rapport à l'ensemble des capteurs ou réciproquement, procédé dans lequel on traite les signaux fournis par les capteurs, pour déterminer les composantes des forces exercées sur les capteurs par l'objet, ce procédé étant **caractérisé en ce que** l'on détermine en outre la vitesse tangentielle relative d'au moins un point de l'objet (6, 34), qui est en contact avec l'un des capteurs (10, 24).

10. Procédé selon la revendication 9, dans lequel ce point, dont la vitesse tangentielle relative est déterminée et qui est en contact avec l'un des capteurs, est en outre un point en lequel la composante de la force exercée par l'objet sur ce capteur, composante qui est normale à la face du support, est maximale.

11. Procédé selon l'une quelconque des revendications 9 et 10, dans lequel on filtre les signaux fournis par les capteurs (10, 24), on effectue une analyse spatio-temporelle des signaux ainsi filtrés, pour établir une carte des efforts instantanés subis par les capteurs, et l'on établit la vitesse de propagation des efforts tangentiels subis par ces capteurs, les points de la zone de contact entre l'objet (6, 34) et les capteurs, où cette vitesse est maximale, étant les points où la production d'énergie est maximale.

12. Procédé selon l'une quelconque des revendications 9 à 11, dans lequel on déplace préalablement et successivement plusieurs objets-témoins contre l'ensemble des capteurs (10, 24) ou réciproquement, pour mesurer les frottements de ces objets-témoins et mémoriser les textures et rugosités respectives de ceux-ci et, en vue de reconnaître ensuite un autre objet, on déplace cet autre objet contre l'ensemble des capteurs ou réciproquement, pour mesurer le frottement de cet autre objet et comparer sa texture et sa rugosité à celles qui ont été mémorisées.

13. Procédé selon l'une quelconque des revendications 9 à 12, dans lequel chaque capteur comporte une membrane déformable (12), fixée au support (4) et pourvue de jauges de contrainte (13), et une tige rigide (14) qui est reliée à cette membrane, chaque capteur fournissant des signaux électriques qui sont représentatifs d'une force exercée sur la tige que comporte ce capteur.

## Claims

1. Apparatus for measuring friction created by an object (6, 34), this apparatus including
- a set of three-dimensional force sensors (10, 24), distributed on a face of a support (4, 26), each sensor being designed to output electrical signals representative of a force applied by the object on this sensor, this object moving with respect to the set of sensors or vice versa, and
- electronic means (16, 30) for processing signals output by the sensors, these electronic processing means being designed to determine components of forces applied on the sensors by the object,
this apparatus being **characterized in that** the electronic processing means are also designed to output the relative tangential velocity of at least one point on the object (6, 34) that is in contact with one of the sensors (10, 24), by making a space-time analysis of the signals emitted by the sensors.

2. Apparatus according to claim 1, in which this point, for which the relative tangential velocity is provided and that is in contact with one of the sensors, is also a point at which the component of the force applied by the object on this sensor and that is normal to the face of the support, is a maximum.

3. Apparatus according to either claim 1 or 2, in which the electronic processing means (16, 30) are also designed to output the coefficient of friction of the object when it is brought into contact with at least one of the sensors (10, 24) and is moved with respect to this sensor or vice versa.

4. Apparatus according to any one of claims 1 to 3, in which the sensors (10, 24) are uniformly distributed on the face of the support and thus form an array, or matrix, on this face.

5. Apparatus according to any one of claims 1 to 4, in which the support (4, 26), or the face on which the sensors are distributed is rigid.

6. Apparatus according to any one of claims 1 to 4, in which the support (4, 26), on the face on which the sensors are distributed is flexible.

7. Apparatus according to any one of claims 1 to 6, in which the set of sensors (24) is covered with a layer (36) of elastomer material.

8. Apparatus according to any one of claims 1 to 7, in which each sensor comprises a deformable membrane (12), fixed to the support (4) and provided with strain gauges (13), and a rigid rod (14) connected to this membrane, each sensor being designed to output electrical signals representative of a force applied to the rod provided on this sensor.

9. Method of measuring the friction of an object (6, 34), this method using a set of three-dimensional force sensors (10, 24) distributed on one face of a support (4, 26), each sensor outputting electrical signals representative of a vector force applied by the object on this sensor, this object possibly moving with respect to the set of sensors or vice versa, method in which the signals output by the sensors are processed to determine the components of forces applied on the sensors by the object, this method being **characterized in that** the relative tangential velocity of at least one point on the object (6, 34) that is in contact with one of the sensors (10, 24) is also determined.

10. Method according to claim 9, in which this point, for which the relative tangential velocity is determined and that is in contact with one of the sensors, is also a point at which the component of the force applied by the object on this sensor and normal to the face of the support, is a maximum.

11. Method according to either claim 9 or 10, in which signals output by the sensors (10, 24), are filtered, a space-time analysis of these signals thus filtered is made to produce a map of instantaneous forces applied to the sensors, and the propagation velocity of the tangential forces applied to these sensors is produced, the points on the contact zone between the object (6, 34) and the sensors, at which this velocity is maximum being the points at which maximum energy is produced.

12. Method according to any one of claims 9 to 11, in which several control objects are beforehand and sequentially moved in contact with the set of sensors (10, 24) or vice versa, to measure the friction of these control objects and memorize their respective textures and roughnesses, and then another object is moved in contact with the set of sensors, or vice versa, to measure the friction of this other object and to compare its texture and roughness with what was already memorized, in order to recognize this other object.

13. Method according to any one of claims 9 to 12, in which each sensor comprises a deformable membrane (12), fixed to the support (4) and provided with strain gauges (13), and a rigid rod (14) connected to this membrane, each sensor being designed to output electrical signals representative of a force applied to the rod provided on this sensor.

## Patentansprüche

1. Vorrichtung zur Messung der durch einen Gegenstand (6, 34) erzeugten Reibung, umfassend
- eine Gruppe dreidimensionaler Kraftsensoren (10, 24), verteilt über eine Fläche eines Trägers (4, 26), wobei jeder Sensor dazu dient, elektrische Signale zu liefern, die repräsentativ sind für eine durch den Gegenstand auf diesen Sensor ausgeübte Kraft, und dieser Gegenstand in Bezug auf die Sensorengruppe - oder umgekehrt - beweglich ist, und
- elektronische Einrichtungen (16, 30) zur Verarbeitung der durch die Sensoren gelieferten Signale, wobei diese elektronischen Verarbeitungseinrichtungen dazu dienen, die Komponenten der durch den Gegenstand auf die Sensoren ausgeübten Kräfte zu bestimmen,
dabei ist diese Vorrichtung **dadurch gekennzeichnet, dass** die elektronischen Verarbeitungseinrichtungen außerdem dazu dienen, die relative Tangentialgeschwindigkeit wenigstens eines einen der Sensoren (10, 24) berührenden Punkts des Gegenstands (6, 34) zu liefern, indem sie eine Raum-Zeit-Analyse der durch die Sensoren gelieferten Signale erstellen.

2. Vorrichtung nach Anspruch 1, bei der dieser Punkt, dessen relative Tangentialgeschwindigkeit geliefert wird und der einen der Sensoren berührt, außerdem ein Punkt ist, in dem die Komponente der durch den Gegenstand auf diesen Sensor ausgeübten Kraft maximal ist, wobei diese Komponente senkrecht ist zu der Fläche des Trägers.

3. Vorrichtung nach einem der Ansprüche 1 und 2, bei der die elektronischen Verarbeitungseinrichtungen (16, 30) außerdem vorgesehen sind, den Reibungskoeffizient des Gegenstands zu liefern, wenn dieser wenigstens einen der Sensoren (10, 24) berührt und in Bezug auf diesen Sensor verschoben wird, oder umgekehrt.

4. Vorrichtung nach einem der Ansprüche 1 bis 3, bei der die Sensoren (10, 24) gleichmäßig auf der Fläche des Trägers verteilt sind und auf diese Weise auf dieser Fläche ein Gitter, oder Matrix, bilden.

5. Vorrichtung nach einem der Ansprüche 1 bis 4, bei der der Träger (4, 26) auf der Seite, auf der die Sensoren verteilt sind, steif ist.

6. Vorrichtung nach einem der Ansprüche 1 bis 4, bei der der Träger (4, 26) auf der Seite, auf der die Sensoren verteilt sind, nachgiebig ist.

7. Vorrichtung nach einem der Ansprüche 1 bis 6, bei der die Gruppe der Sensoren (24) von einer Schicht (36) aus einem elastomeren Material bedeckt sind.

8. Vorrichtung nach einem der Ansprüche 1 bis 7, bei der jeder Sensor eine verformbare Membran (12), befestigt an dem Träger (4) und versehen mit Dehnungsmessstreifen (13), und eine steife Stange (14) umfasst, die mit dieser Membran verbunden ist, wobei jeder Sensor dazu dient, elektrische Signale zu liefern, die repräsentativ sind für eine auf die Stange dieses Sensors wirkende Kraft.

9. Verfahren zur Messung der durch einen Gegenstand (6, 34) erzeugten Reibung, wobei dieses Verfahren eine Gruppe dreidimensionaler Kraftsensoren (10, 24) benutzt, die verteilt sind über eine Fläche eines Trägers (4, 26), wobei jeder Sensor dazu dient, elektrische Signale zu liefern, die repräsentativ sind für eine durch den Gegenstand auf diesen Sensor ausgeübte Kraft und dieser Gegenstand in Bezug auf die Sensorengruppe - oder umgekehrt - beweglich ist, und man in diesem Verfahren die durch die Sensoren gelieferten Signale verarbeitet um die Komponenten der durch den Gegenstand auf die Sensoren ausgeübten Kräfte zu bestimmen,
wobei dieses Verfahren **dadurch gekennzeichnet ist, dass** man außerdem die relative Tangentialgeschwindigkeit wenigstens eines einen der Sensoren (10, 24) berührenden Punkts des Gegenstands (6, 34) bestimmt.

10. Verfahren nach Anspruch 9, bei dem dieser Punkt, dessen relative Tangentialgeschwindigkeit bestimmt wird und der einen der Sensoren berührt, außerdem ein Punkt ist, in dem die Komponente der durch den Gegenstand auf diesen Sensor ausgeübten Kraft maximal ist, wobei diese Komponente senkrecht ist zu der Seite bzw. Fläche des Trägers.

11. Verfahren nach einem der Ansprüche 9 und 10, bei dem man die durch die Sensoren (10, 24) gelieferten Signale filtert und dann eine Raum-Zeit-Analyse der gefilterten Signale erstellt, um eine Karte der auf den Sensor wirkenden Momentankräfte zu erstellen, und man die Ausbreitungsgeschwindigkeit der auf diese Sensoren wirkenden Tangentialkräfte ermittelt, wobei die Punkte der Berührungszone zwischen dem Gegenstand (6, 34) und den Sensoren, wo diese Geschwindigkeit maximal ist, die Punkte sind, wo die Energieerzeugung maximal ist.

12. Verfahren nach einem der Ansprüche 9 bis 11, bei dem man vorher und nachher mehrere Mustergegenstände gegen die Sensorengruppe (10, 24) oder umgekehrt verschiebt, um die Reibungen dieser Mustergegenstände zu messen und ihre jeweiligen Texturen und Rauheiten abzuspeichern, und man anschließend hinsichtlich des Erkennens eines anderen Gegenstands diesen anderen Gegenstand gegen die Sensorengruppe oder umgekehrt verschiebt, um die Reibung dieses anderen Gegenstands zu messen und seine Textur und seine Rauheit mit denen zu vergleichen, die schon abgespeichert worden sind.

13. Verfahren nach einem der Ansprüche 9 bis 12, bei dem jeder Sensor eine verformbare Membran (12), befestigt an dem Träger (4) und versehen mit Dehnungsmessstreifen (13), und eine steife Stange (14) umfasst, die mit dieser Membran verbunden ist, wobei jeder Sensor elektrische Signale liefert, die repräsentativ sind für eine auf die Stange dieses Sensors ausgeübte Kraft.
